# EUROPÄISCHE PATENTSCHRIFT

(11) **EP 3 241 675 B1**
(45) Veröffentlichungstag und Bekanntmachung des Hinweises auf die Patenterteilung: **07.08.2019**
(21) Anmeldenummer: 16168453.5
(22) Anmeldetag: 04.05.2016
(51) Int. Cl.: B32B 15/01, C22C 38/02, C22C 38/04, C22C 38/18, C22C 38/38

(54) **DREILAGIGER VERBUNDWERKSTOFF IN FORM EINES BLECHS ODER BANDS**
THREE-LAYER COMPOSITE MATERIAL IN THE FORM OF A SHEET OR RIBBON
MATIÈRE COMPOSITE EN TROIS COUCHES SOUS FORME D'UNE TÔLE OU D'UNE BANDE

(43) Veröffentlichungstag der Anmeldung: 08.11.2017
(73) Patentinhaber: voestalpine Stahl GmbH, 4020 Linz (AT)
(72) Erfinder: Etzlstorfer, Christoph, 4264 Grünbach (AT); Leitner, Alois, 4852 Weyregg am Attersee (AT); Hackl, Reinhard, 4040 Gramastetten (AT)
(74) Vertreter: Jell, Friedrich

(56) Entgegenhaltungen:
- WO-A1-2009/135779
- WO-A1-2016/050417
- DE-A1-102007 022 453
- DE-A1-102013 017 798
- DE-A1-102014 111 628

## Beschreibung

Die Erfindung betrifft einen dreilagigen Verbundwerkstoff in Form eines Blechs oder Bands mit einer am Verbundwerkstoff eine mittlere Lage bildenden, ersten Kernschicht, aufweisend einen ersten Stahlwerkstoff, und mit einer zweiten Plattierschicht, aufweisend einen zum ersten Stahlwerkstoff unterschiedlichen zweiten Stahlwerkstoff, und mit einer dritten Plattierschicht, aufweisend einen zum ersten Stahlwerkstoff unterschiedlichen dritten Stahlwerkstoff, wobei die zweite und dritte Plattierschicht auf gegenüberliegenden Seiten der Kernschicht walzplattiert vorgesehen sind und die äußeren beiden Lagen am Verbundwerkstoff ausbilden, wobei bei gleichbleibender Dicke des Verbundwerkstoffs die Kernschichtdicke des ersten Stahlwerkstoffs der Kernschicht über die Breite des Verbundwerkstoffs variiert.

Um einem dreilagigen Verbundwerkstoff über seine Breite unterschiedliche mechanische und/oder technologische Eigenschaften zu geben, ist es aus dem Stand der Technik bekannt (DE10258824B2, EP2613896B1), über die Breite der Kernschicht des Verbundwerkstoffs abwechselnd unterschiedliche Stahlwerkstoffe vorzusehen, um damit zumindest die Kernschichtdicke eines Stahlwerkstoffs der Kernschicht über die Breite des Verbundwerkstoffs zu variieren. Hierfür werden verschiedenste Stahlbänder nebeneinander angeordnet, die zwischen zwei Plattierlagen vorgesehen durch ein gemeinsames Walzplattierverfahren gefügt werden. Die Plattierlagen können eine zu den Stahlbändern des Kerns unterschiedliche Stahllegierung aufweisen. Nachteilig hat sich herausgestellt, dass trotz eines Fügens durch Walzplattieren eine unerwartet schwache Verbindung zwischen den aneinanderstoßenden Stahlwerkstoffen in der Kernschicht auftreten kann. Mit einer unbefriedigenden mechanischer Belastbarkeit des Verbundwerkstoffs ist sohin zu rechnen. Derartige Verbundwerkstoffe sind daher für eine Fahrzeugstruktur, insbesondere Karosseriestruktur, nicht bzw. nur bedingt geeignet.

Mit einer geeigneten Legierungsauswahl bei den Stahlwerkstoffen und/oder einem engen Prozessfenster beim Walzplattieren kann versucht werden, diesen Nachteilen entgegenzuwirken, womit sich jedoch die Herstellkosten des Verbundwerkstoffs erhöhen oder auch dessen universelle Verwendbarkeit reduzieren kann.

Zudem sind aus dem Stand der Technik fünflagige Verbundwerkstoffe bekannt (DE102014114365A1), die zwischen einer Kernschicht aus einem Stahlwerkstoff hoher Festigkeit und außenliegenden Plattierschichten aus einem Stahlwerkstoff niedriger Festigkeit je eine Zwischenschicht aus mehreren Stahlwerkstoffen unterschiedlicher Festigkeit aufweisen. Ein derartiger fünfschichtiger Verbundwerkstoff ist vergleichsweise aufwendig walzplattierbar und damit kostenintensiv. Ebenso bedarf dieser bei seiner weiteren Verwendung beim Formhärten engen Prozessfenstern, was eine nachteilige Auswirkung auf die Handhabung des Verbundwerkstoffs hat.

Es ist daher die Aufgabe der Erfindung, einen durch Walzplattieren hergestellten dreischichtigen Verbundwerkstoff mit einer variierenden Kernschichtdicke der eingangs geschilderten Art derart zu verändern, dass dieser durch seine hohe mechanische Belastbarkeit für eine Fahrzeugstruktur verlässlich geeignet ist.

Die Erfindung löst die gestellte Aufgabe dadurch, dass sich der erste Stahlwerkstoff der Kernschicht durchgehend über die gesamte Breite des Verbundwerkstoffs erstreckt und formhärtbar ist, wobei der zweite und/oder dritte Stahlwerkstoff der Plattierschichten in der Plattierschichtdicke der Variation der Kernschichtdicke gegensinnig folgt sowie einen zum ersten Stahlwerkstoff geringeren Kohlenstoffgehalt aufweist.

Erstreckt sich der erste Stahlwerkstoff der Kernschicht durchgehend über die gesamte Breite des Verbundwerkstoffs und ist dieser formhärtbar, kann damit in der Kernschicht eine Zone geschaffen werden, die in der Art einer Kernsehne wenigstens ein Mindestmaß an mechanischer Belastbarkeit am Verbundwerkstoff sicherstellen kann. Der erfindungsgemäße Verbundwerkstoff kann daher verlässlich geforderte mechanische Belastbarkeiten erfüllen, die beispielsweise von Bauteilen für eine Fahrzeugstruktur vorliegen. Da zudem diese formhärtbare Kernsehne einen reduziert festen Verbund - wie dieser beispielsweise im Stand der Technik an den Stoßfläche von nebeneinander vorgesehenen Stahlwerkstoffen auftritt - per se ausschließt, kann ohne Bedenken der Verbundwerkstoff auch einem Walzplattieren unterworfen werden, wenn hierfür der zweite und/oder dritte Stahlwerkstoff der Plattierschichten in der Plattierschichtdicke der Variation der Kernschichtdicke gegensinnig folgt sowie einen zum ersten Stahlwerkstoff geringeren Kohlenstoffgehalt aufweist. Über Letztgenanntes kann zudem das duktile Verhalten des Verbundwerkstoffs eingestellt werden - was der vielseitigen Anwendbarkeit des Verbundwerkstoffs förderlich sein kann. Zudem kann durch den gegensinnig folgenden Dickenausgleich des zweiten und/oder dritten Stahlwerkstoffs eine gleichbleibende Dicke des Verbundwerkstoffs gewährleistet bleiben, was sich auf weitere Formgebungsverfahren am Verbundwerkstoff positiv auswirken kann. Insbesondere kann dies beim Formhärten bzw. Presshärten des Verbundwerkstoffs aufgrund des im Wesentlichen gleichen E-Moduls über die Breite des Verbundwerkstoffs ein reproduzierbar herstellbares Bauteil garantieren.

Der Verbundwerkstoff kann weiter verbessert werden, wenn der zweite und dritte Stahlwerkstoff der Plattierschichten in ihren Plattierschichtdicken der Variation der Kernschichtdicke gegensinnig folgen.

Vorzugsweise ist die Kernschicht symmetrisch aufgebaut, wodurch sich der Verbundwerkstoff beim Formhärten bzw. Presshärten durch seine einfache Handhabbarkeit auszeichnen kann.

Vorzugsweise ist der Kohlenstoffgehalt der Stahlwerkstoffe von Kernschicht und von den beiden Plattierschichten kleiner 0,8 Masse-%.

Eine besonders mechanisch standfeste Kernschicht kann geschaffen werden, wenn der erste Stahlwerkstoff eine höherfest formhärtbare oder hochfest formhärtbare Stahllegierung ist.

Hierzu kann sich vorzugsweise als erster Stahlwerkstoff ein Mangan-Bohr-Stahl, insbesondere 20MnB8, 22MnB5 oder 32MnB5 Stahl, auszeichnen.

Vorzugsweise eignet sich als erster Stahlwerkstoff eine Stahllegierung, die

| | | |
|---|---|---|
| 0,08 bis 0,6 | Masse-% | Kohlenstoff (C), |
| 0,8 bis 3,0 | Masse-% | Mangan (Mn), |
| 0,01 bis 0,07 | Masse-% | Aluminium (Al), |
| 0,01 bis 0,5 | Masse-% | Silizium (Si), |
| 0,02 bis 0,6 | Masse-% | Chrom (Cr) |
| 0,01 bis 0,08 | Masse-% | Titan (Ti), |
| < 0,02 | Masse-% | Stickstoff (N), |
| 0,002 bis 0,02 | Masse-% | Bor (B), |
| < 0,01 | Masse-% | Phosphor (P), |
| < 0,01 | Masse-% | Schwefel (S), |
| < 1 | Masse-% | Molybdän (Mo) und |

als Rest Eisen sowie erschmelzungsbedingte Verunreinigungen aufweist. Als erster Stahlwerkstoff ist auch eine Stahllegierung denkbar, die

| | | |
|---|---|---|
| 0,08 bis 0,30 | Masse-% | Kohlenstoff (C), |
| 1,00 bis 3,00 | Masse-% | Mangan (Mn), |
| 0,03 bis 0,06 | Masse-% | Aluminium (Al), |
| 0,01 bis 0,20 | Masse-% | Silizium (Si), |
| 0,02 bis 0,3 | Masse-% | Chrom (Cr), |
| 0,03 bis 0,04 | Masse-% | Titan (Ti), |
| < 0,007 | Masse-% | Stickstoff (N), |
| 0,002 bis 0,006 | Masse-% | Bor (B), |
| < 0,01 | Masse-% | Phosphor (P), |
| < 0,01 | Masse-% | Schwefel (S), |
| < 1 | Masse-% | Molybdän (Mo) und |

als Rest Eisen sowie erschmelzungsbedingte Verunreinigungen aufweist.

Eine besonders mechanisch standfeste Kernschicht kann geschaffen werden, wenn der erste Stahlwerkstoff einen Gehalt an Mn größer gleich 0,8 Gew.-% aufweist.

Die Duktilität des Verbundwerkstoffs kann erhöht werden, wenn der zweite und/oder dritte Stahlwerkstoff ein mikrolegierter Stahl, beispielsweise HC460LA, HC500LA oder HC340LA Stahl, ist. Ebenso ist ein IF-Stahl, beispielsweise ein HC220Y Stahl, denkbar.

Vorzugsweise können der zweite und dritte Stahlwerkstoff aus der gleichen Stahltype bestehen, um damit beispielsweise das Handling des Verbundwerkstoffs beim Umformen zu erleichtern. Beispielsweise kann der zweite und dritte Stahlwerkstoff ein HC220Y Stahl oder auch ein HC460LA Stahl sein.

Vorteilhaft kann sein, wenn der erste Stahlwerkstoff ein 20MnB8 Stahl und der zweite und dritte Stahlwerkstoff ein HC220Y Stahl sind. Alternativ kann auch vorteilhaft sein, wenn der erste Stahlwerkstoff ein 32MnB5 Stahl und der zweite und dritte Stahlwerkstoff ein HC460LA Stahl sind. Mit diesen Stahlkombinationen können die Lagen des Verbundwerkstoffs hinsichtlich der mechanischen Parameter aufeinander weiter abgestimmt werden, um damit beispielsweise das Umform- und/oder Versagensverhalten des Verbundwerkstoffs zu verbessern.

Vorzugsweise liegt die Dicke des Verbundwerkstoffs zwischen 0,5 und 3 mm, beispielsweise zwischen 1 und 2 mm.

Vorzugsweise liegt die Kernschichtdicke zwischen 30 und 90%, beispielsweise zwischen 50 und 85%, der Dicke des Verbundwerkstoffs, um bei einer möglichst hohen Festigkeit des Verbundwerkstoffs gleichzeitig die Duktilität zu optimieren.

Ein vergleichsweise homogener Übergang zwischen den unterschiedlichen Dicken der Lagen kann geschaffen werden, wenn die Grenzkontur zwischen Kernschicht und der Plattierschicht, deren Stahlwerkstoff in der Plattierschichtdicke der variierenden Kernschichtdicke gegensinnig folgt, diesem Konturbereich der variierenden Kernschichtdicke schräg verläuft.

Der erfindungsgemäße Verbundwerkstoff kann sich insbesondere für eine Platine für ein Umformverfahren eignen, beispielsweise für ein presshärtendes Tiefziehen. Dies unter anderem aufgrund der durchgehenden Kernschicht. Höchste mechanische Eigenschaften kann ein Bauteil für eine Fahrzeugstruktur aus einer formgehärteten Platine gemäß der Erfindung garantieren.

Der Erfindungsgemäße formgehärteten Verbundwerkstoffs kann sich für eine Fahrzeugstruktur, beispielsweise Karosseriestruktur besonders eignen.

In den Figuren wird beispielsweise der Erfindungsgegenstand anhand mehrerer Ausführungsvarianten näher dargestellt. Es zeigen
- Fig. 1: ein entlang der Breitseite geschnittener Verbundwerkstoff in 3-D Ansicht nach einem ersten Ausführungsbeispiel,
- Fig. 2: eine Seitenansicht eines anderen Verbundwerkstoffs nach einem zweiten Ausführungsbeispiel und
- Fig. 3: eine Seitenansicht eines weiteren Verbundwerkstoffs nach einem dritten Ausführungsbeispiel.

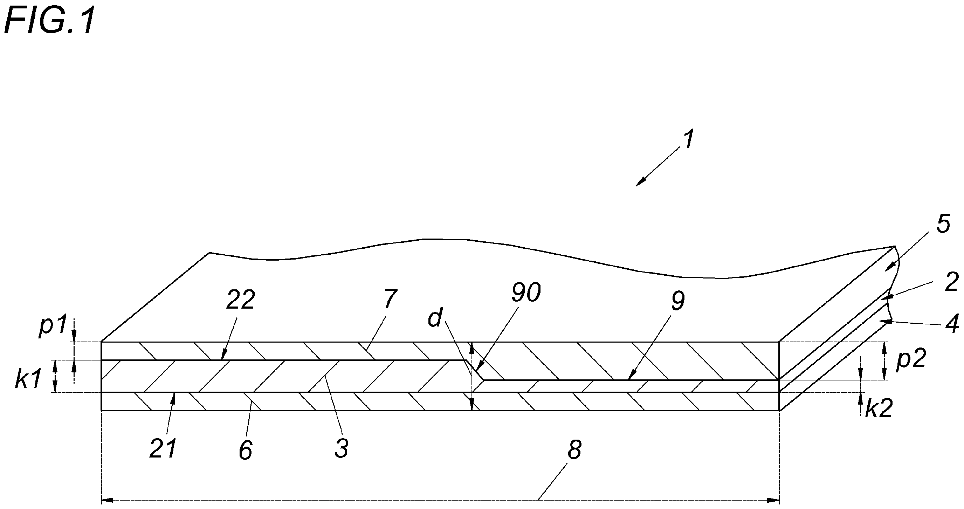

Nach Fig. 1 ist ein Verbundwerkstoff 1 dargestellt, der von drei Lagen an Stahlwerkstoffen ausgebildet wird. So ist als mittlere Lage eine Kernschicht 2 aus einem ersten Stahlwerkstoff 3 zu erkennen, die beidseitig jeweils mit einer ersten Plattierschicht 3 und mit einer zweiten Plattierschicht 4 versehen ist, die die beiden äußeren Lagen am Verbundwerkstoff 1 ausbilden. Diese beiden Plattierschichten 4, 5 sind je aus einem Stahlwerkstoff 6, 7, welche beiden Stahlwerkstoff 6, 7 zum ersten Stahlwerkstoff 3 einen geringeren Kohlenstoffgehalt aufweisen.

Die Kernschichtdicke k des ersten Stahlwerkstoffs 3 der Kernschicht 2 variiert über die Breite 8 des Verbundwerkstoffs 1, wie dies anhand der unterschiedlichen Kernschichtdicken k1, k2 in Fig. 1 erkannt werden kann.

Erfindungsgemäß erstreckt sich der erste Stahlwerkstoff 3 der Kernschicht 2 durchgehend über die gesamte Breite 8 des Verbundwerkstoffs 1 - und ist ebenso formhärtbar, beispielsweise, indem eine Stahllegierung mit einem Gehalt an Mn größer gleich 0,8 Gew.-% verwendet wird. Als erster formhärtbarer bzw. presshärtbarer Stahlwerkstoff 3 eignet sich ein erster Stahlwerkstoff mit folgender Legierungszusammensetzung (alle Angaben in Masse-%):

| C | Si | Mn | P | S | Al | Cr | Ti | B | N |
|---|---|---|---|---|---|---|---|---|---|
| [%] | [%] | [%] | [%] | [%] | [%] | [%] | [%] | [%] | [%] |
| 0,20 | 0,18 | 2,01 | 0,0062 | 0,001 | 0,054 | 0,03 | 0,032 | 0,0030 | 0,0041 |

Rest Eisen und erschmelzungsbedingte Verunreinigungen, wobei als Umwandlungsverzögerer in derartigen Stählen insbesondere die Legierungselemente Bor, Mangan und optional Chrom und Molybdän verwendet werden. Denkbar ist auch ein anderer Mangan-Bohr-Stahl, beispielsweise vom Typ 22MnB5 oder 32MnB5. Damit ist die Kernschicht 2 besonders auf das Fügen beim Walzplattieren vorbereitet und kann einen standfesten Verbund mit der Plattierung bzw. den Plattierschichten 6, 7 eingehen.

Zudem folgt der dritte Stahlwerkstoff 7 der Plattierschichten 4, 5 in der Plattierschichtdicke p der Variation der Kernschichtdicke k gegensinnig, wie dies am Verbundwerkstoff 1 mittig zu erkennen ist. Hier verläuft der Konturbereich 90 die Grenzkontur 9 zwischen den beiden Lagen schräg, wie dies im Übergang von der Plattierschichtdicke p1 bzw. Kernschichtdicke k1 auf die Plattierschichtdicke p2 bzw. Kernschichtdicke k2 zu erkennen ist. Dieser schräg verlaufende Konturbereich 90 schafft einen vergleichsweise homogenen Übergang und führt am dreischichtigen Verbundwerkstoff 1 zu vorteilhaften mechanischen Eigenschaften.

Der Kohlenstoffgehalt des dritten Stahlwerkstoffs 7 ist zudem geringer als der Kohlenstoffgehalt des ersten Stahlwerkstoffs 3 - vorzugsweise sind der zweite und dritte Stahlwerkstoff 6, 7 legierungsgleich und bestehen aus einem Stahlwerkstoff vom Typ HC340LA. Ebenso ist ein HC220Y Stahl denkbar.

Damit stellt der erste Stahlwerkstoff 3 der Kernschicht 2 in Kombination mit dem zweiten und dritten Stahlwerkstoff 6, 7 sicher, dass der Verbundwerkstoff 1 jene mechanischen Kennwerte erfüllen kann, welche von einem Bauteile einer Fahrzeugstruktur gefordert werden.

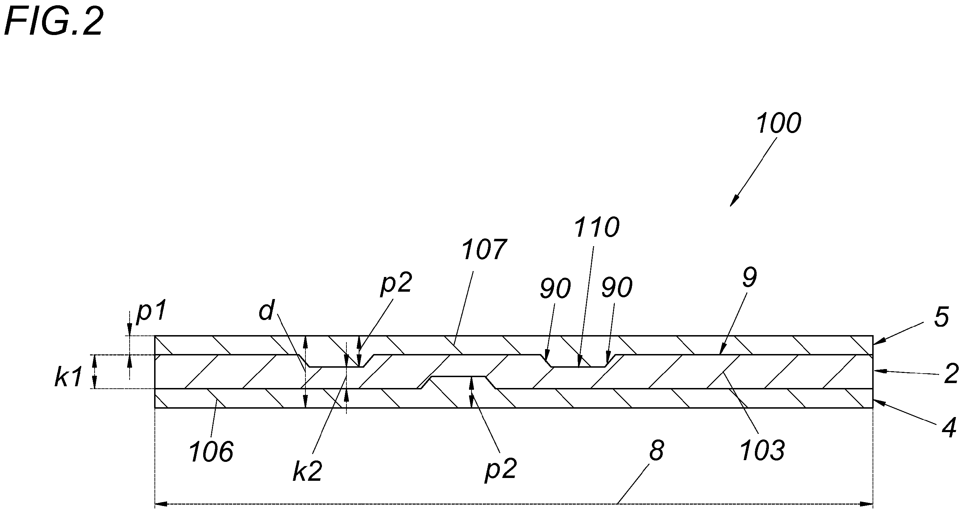

Entsprechend der Fig. 2 wird ein anderer dreilagiger Verbundwerkstoff 100 gezeigt, dessen Kernschicht 2 und Plattierschichten 4, 5 im Vergleich zum nach Fig. 1 dargestellten Verbundwerkstoff 1 anders variieren. Hier variiert die Kernschichtdicke k des ersten Stahlwerkstoffs 103 der Kernschicht 2 mehrmals über die Breite 8 des Verbundwerkstoffs 100 und bildet bereichsweise zurückspringende sickenförmige Bereiche 110 aus. Der zweite und/oder dritte Stahlwerkstoff 106, 107 der Plattierschichten 4, 5 folgen in der Plattierschichtdicke p der Variation der Kernschichtdicke k gegensinnig. Auch hier verläuft die Grenzkontur 9 im Konturbereich 90 der variierenden Kernschichtdicke k schräg.

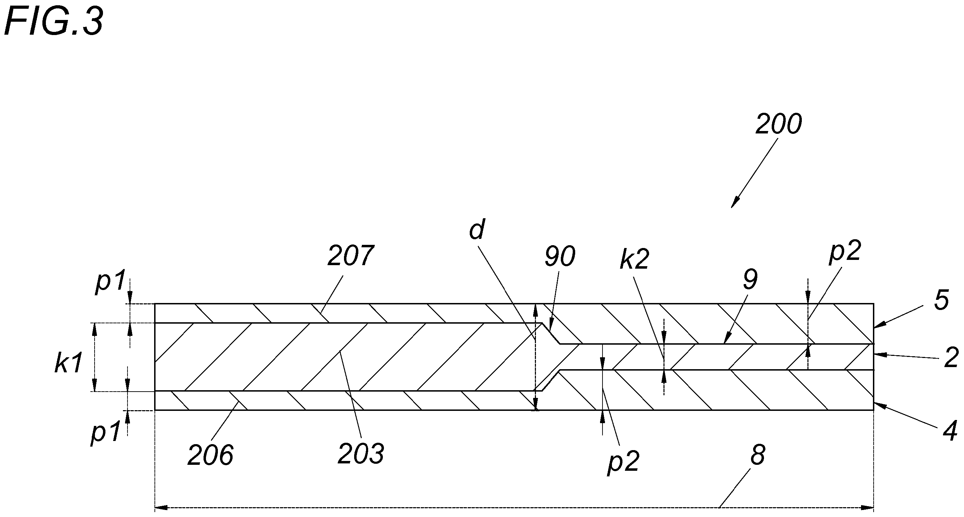

Entsprechend der Fig. 3 wird ein weiterer dreilagiger Verbundwerkstoff 300 gezeigt, dessen Kernschicht 2 im Vergleich zu den anderen Ausführungsbeispielen symmetrisch aufgebaut ist. Auch hier variiert die Kernschichtdicke k des ersten Stahlwerkstoffs 203 der Kernschicht 2, welcher Variation der zweite und dritte Stahlwerkstoff 206, 207 der zweiten bzw. dritten Plattierschicht 4, 5 gegensinnig folgen. Auch hier verläuft die Grenzkontur 9 im Konturbereich 90 der variierenden Kernschichtdicke k schräg, wie dies der Fig. 3 entnommen werden kann.

## Patentansprüche

1. Dreilagiger Verbundwerkstoff in Form eines Blechs oder Bands, bestehend aus einer am Verbundwerkstoff (1, 100, 200) eine mittlere Lage bildenden, ersten Kernschicht (2), aufweisend einen ersten Stahlwerkstoff (3, 103, 203), einer zweiten Plattierschicht (4), aufweisend einen zum ersten Stahlwerkstoff (3, 103, 203) unterschiedlichen zweiten Stahlwerkstoff (6, 106, 206), und einer dritten Plattierschicht (5), aufweisend einen zum ersten Stahlwerkstoff (3, 103, 203) unterschiedlichen dritten Stahlwerkstoff (7, 107, 207), wobei die zweite und dritte Plattierschicht (5) auf gegenüberliegenden Seiten (21, 22) der Kernschicht (2) walzplattiert vorgesehen sind und die äußeren beiden Lagen am Verbundwerkstoff (1, 100, 200) ausbilden, wobei bei gleichbleibender Dicke (d) des Verbundwerkstoffs (1, 100, 200) die Kernschichtdicke (k) des ersten Stahlwerkstoffs (3, 103, 203) der Kernschicht (2) über die Breite (8) des Verbundwerkstoffs (1, 100, 200) variiert, wobei sich der erste Stahlwerkstoff (3, 103, 203) der Kernschicht (2) durchgehend über die gesamte Breite (8) des Verbundwerkstoffs (1, 100, 200) erstreckt und formhärtbar ist, wobei der zweite und/oder dritte Stahlwerkstoff (6, 7, 106, 107, 206, 207) der Plattierschichten (4, 5) in der Plattierschichtdicke (p) der Variation der Kernschichtdicke (k) gegensinnig folgt und der zweite und dritte Stahlwerkstoff (6, 7, 106, 107, 206, 207) einen zum ersten Stahlwerkstoff (3, 103, 203) geringeren Kohlenstoffgehalt aufweisen.

2. Verbundwerkstoff nach Anspruch 1, **dadurch gekennzeichnet**, der zweite und dritte Stahlwerkstoff (6, 7, 106, 107, 206, 207) der Plattierschichten (4, 5) in ihren Plattierschichtdicken (p) der Variation der Kernschichtdicke (k) gegensinnig folgen.

3. Verbundwerkstoff nach Anspruch 2, **dadurch gekennzeichnet, dass** die Kernschicht (2) symmetrisch aufgebaut ist.

4. Verbundwerkstoff nach Anspruch 1, 2 oder 3, **dadurch gekennzeichnet, dass** der Kohlenstoffgehalt der Stahlwerkstoffe (3, 6, 7, 103, 106, 107, 203, 206, 207) von Kernschicht (2) und von beiden Plattierschichten (4, 5) kleiner 0,8 Masse-% ist.

5. Verbundwerkstoff nach einem der Ansprüche 1 bis 4, **dadurch gekennzeichnet, dass** der erste Stahlwerkstoff (3, 103, 203) eine höherfest formhärtbare oder hochfest formhärtbare Stahllegierung ist.

6. Verbundwerkstoff nach einem der Ansprüche 1 bis 5, **dadurch gekennzeichnet, dass** der erste Stahlwerkstoff (3, 103, 203) ein Mangan-Bohr-Stahl, insbesondere 20MnB8, 22MnB5 oder 32MnB5 Stahl, ist.

7. Verbundwerkstoff nach einem der Ansprüche 1 bis 6, **dadurch gekennzeichnet, dass** der erste Stahlwerkstoff (3, 103, 203)
| | | |
|---|---|---|
| 0,08 bis 0,6 | Masse-% | Kohlenstoff (C), |
| 0,8 bis 3,0 | Masse-% | Mangan (Mn), |
| 0,01 bis 0,07 | Masse-% | Aluminium (Al), |
| 0,01 bis 0,5 | Masse-% | Silizium (Si), |
| 0,02 bis 0,6 | Masse-% | Chrom (Cr) |
| 0,01 bis 0,08 | Masse-% | Titan (Ti), |
| < 0,02 | Masse-% | Stickstoff (N), |
| 0,002 bis 0,02 | Masse-% | Bor (B), |
| < 0,01 | Masse-% | Phosphor (P), |
| < 0,01 | Masse-% | Schwefel (S), |
| < 1 | Masse-% | Molybdän (Mo) und |
als Rest Eisen sowie erschmelzungsbedingte Verunreinigungen aufweist.

8. Verbundwerkstoff nach einem der Ansprüche 1 bis 6, **dadurch gekennzeichnet, dass** der erste Stahlwerkstoff (3, 103, 203)
| | | |
|---|---|---|
| 0,08 bis 0,30 | Masse-% | Kohlenstoff (C), |
| 1,00 bis 3,00 | Masse-% | Mangan (Mn), |
| 0,03 bis 0,06 | Masse-% | Aluminium (Al), |
| 0,01 bis 0,20 | Masse-% | Silizium (Si), |
| 0,02 bis 0,3 | Masse-% | Chrom (Cr), |
| 0,03 bis 0,04 | Masse-% | Titan (Ti), |
| < 0,007 | Masse-% | Stickstoff (N), |
| 0,002 bis 0,006 | Masse-% | Bor (B), |
| < 0,01 | Masse-% | Phosphor (P), |
| < 0,01 | Masse-% | Schwefel (S), |
| < 1 | Masse-% | Molybdän (Mo) und |
als Rest Eisen sowie erschmelzungsbedingte Verunreinigungen aufweist.

9. Verbundwerkstoff nach einem der Ansprüche 1 bis 8, **dadurch gekennzeichnet, dass** der erste Stahlwerkstoff (3, 103, 203) einen Gehalt an Mn größer gleich 0,8 Gew.-% aufweist.

10. Verbundwerkstoff nach einem der Ansprüche 1 bis 9, **dadurch gekennzeichnet, dass** der zweite und/oder dritte Stahlwerkstoff (6, 7, 106, 107, 206, 207) ein mikrolegierter Stahl, insbesondere HC460LA, HC500LA oder HC340LA Stahl, oder IF-Stahl, insbesondere HC220Y Stahl, ist.

11. Verbundwerkstoff nach einem der Ansprüche 1 bis 10, **dadurch gekennzeichnet, dass** der zweite und dritte Stahlwerkstoff (6, 7, 106, 107, 206, 207) aus der gleichen Stahltype bestehen.

12. Verbundwerkstoff nach einem der Ansprüche 1 bis 11, **dadurch gekennzeichnet, dass** der erste Stahlwerkstoff ein 20MnB8 Stahl und der zweite und dritte Stahlwerkstoff ein HC220Y Stahl sind oder der erste Stahlwerkstoff ein 32MnB5 Stahl und der zweite und dritte Stahlwerkstoff ein HC460LA Stahl sind.

13. Verbundwerkstoff nach einem der Ansprüche 1 bis 12, **dadurch gekennzeichnet, dass** die Dicke (d) des Verbundwerkstoffs (1, 100, 200) zwischen 0,5 und 3 mm, insbesondere zwischen 1 und 2 mm liegt.

14. Verbundwerkstoff nach einem der Ansprüche 1 bis 13, **dadurch gekennzeichnet, dass** die Kernschichtdicke (k) zwischen 30 und 90%, insbesondere zwischen 50 und 85%, der Dicke (d) des Verbundwerkstoffs (1, 100, 200) liegt.

15. Verbundwerkstoff nach einem der Ansprüche 1 bis 14, **dadurch gekennzeichnet, dass** die Grenzkontur (9) zwischen Kernschicht (2) und jener Plattierschicht (5), deren Stahlwerkstoff (7, 107, 106, 206, 207) in der Plattierschichtdicke (p) der variierenden Kernschichtdicke (k) gegensinnig folgt, in diesem Konturbereich (90) der variierenden Kernschichtdicke (k) schräg verläuft.

16. Bauteil für eine Fahrzeugstruktur aus einer formgehärteten Platine mit einem Verbundwerkstoff (1, 100, 200) nach einem der Ansprüche 1 bis 15.

17. Verwendung eines formgehärteten dreilagigen Verbundwerkstoffs (1, 100, 200) nach einem der Ansprüche 1 bis 16 in einer Fahrzeugstruktur, insbesondere Karosseriestruktur.

## Claims

1. A three-layered composite material in the form of a metal sheet or strip consisting of a first core layer (2) forming a middle course on the composite material (1, 100, 200) and containing a first steel material (3, 103, 203), a second cladding layer (4) containing a second steel material (6, 106, 206) different from the first steel material (3, 103, 203), and a third cladding layer (5) containing a third steel material (7, 107, 207) different from the first steel material (3, 103, 203), wherein the second and third cladding layers (5) are provided by roll-cladding on opposite sides (21, 22) of the core layer (2) and form the outer two courses on the composite material (1, 100, 200), wherein the thickness (d) of the composite material (1, 100, 200) is constant but the core-layer thickness (k) of the first steel material (3, 103, 203) of the core layer (2) varies over the width (8) of the composite material (1, 100, 200), wherein the first steel material (3, 103, 203) of the core layer (2) extends continuously over the entire width (8) of the composite material (1, 100, 200) and is hot-stampable, wherein the second and/or third steel material (6, 7, 106, 107, 206, 207) of the cladding layers (4, 5) inversely follow, in the cladding-layer thickness (p), the variation of the core-layer thickness (k), and the second and/or third steel material (6, 7, 106, 107, 206, 207) have a carbon content lower than that of the first steel material (3, 103, 203).

2. A composite material according to claim 1, **characterized in that** the second and third steel material (6, 7, 106, 107, 206, 207) of the cladding layers (4, 5) inversely follow, in their cladding-layer thicknesses (p), the variation of the core-layer thickness (k).

3. A composite material according to claim 2, **characterized in that** the core layer (2) is symmetrically constructed.

4. A composite material according to claim 1, 2 or 3, **characterized in that** the carbon content of the steel materials (3, 6, 7, 103, 106, 107, 203, 206, 207) of core layer (2) and of the two cladding layers (4, 5) is lower than 0.8 mass%.

5. A composite material according to one of claims 1 to 4, **characterized in that** the first steel material (3, 103, 203) is a steel alloy that can be hot-stamped with relatively high strength or that can be hot stamped with high strength.

6. A composite material according to one of claims 1 to 5, **characterized in that** the first steel material (3, 103, 203) is a manganese-boron steel, more particularily 20MnB8, 22MnB5 or 32MnB5 steel.

7. A composite material according to one of claims 1 to 6, **characterized in that** the first steel material (3, 103, 203) contains
| | | |
|---|---|---|
| 0.08 to 0.6 | mass% | carbon (C), |
| 0.8 to 3.0 | mass% | manganese (Mn), |
| 0.01 to 0.07 | mass% | aluminum (Al), |
| 0.01 to 0.5 | mass% | silicon (Si), |
| 0.02 to 0.6 | mass% | chromium (Cr) |
| 0.01 to 0.08 | mass% | titanium (Ti), |
| < 0.02 | mass% | nitrogen (N), |
| 0.002 to 0.02 | mass% | boron (B), |
| < 0.01 | mass% | phosphorus (P), |
| < 0.01 | mass% | sulfur (S), |
| < 1 | mass% | molybdenum (Mo) and |
the rest as iron as well as smelting-related impurities.

8. A composite material according to one of claims 1 to 6, **characterized in that** the first steel material (3, 103, 203) contains
| | | |
|---|---|---|
| 0.08 to 0.30 | mass% | carbon (C), |
| 1.00 to 3.00 | mass% | manganese (Mn), |
| 0.03 to 0.06 | mass% | aluminum (Al), |
| 0.01 to 0.20 | mass% | silicon (Si), |
| 0.02 to 0.3 | mass% | chromium (Cr) |
| 0.03 to 0.04 | mass% | titanium (Ti), |
| < 0.007 | mass% | nitrogen (N), |
| 0.002 to 0.006 | mass% | boron (B), |
| < 0.01 | mass% | phosphorus (P), |
| < 0.01 | mass% | sulfur (S), |
| < 1 | mass% | molybdenum (Mo) and |
the rest as iron as well as smelting-related impurities.

9. A composite material according to one of claims 1 to 8, **characterized in that** the first steel material (3, 103, 203) has an Mn content of greater than or equal to 0.8 wt%.

10. A composite material according to one of claims 1 to 9, **characterized in that** the second and/or third steel material (6, 7, 106, 107, 206, 207) is a microalloyed steel, more particularily HC460LA, HC500LA or HC340LA steel, or IF steel, more particularily HC220Y steel.

11. A composite material according to one of claims 1 to 10, **characterized in that** the second and third steel materials (6, 7, 106, 107, 206, 207) consist of the same steel type.

12. A composite material according to one of claims 1 to 11, **characterized in that** the first steel material is a 20MnB8 steel and the second and third steel materials are an HC220Y steel, or the first steel material is a 32MnB5 and the second and third steel materials are an HC460LA.

13. A composite material according to one of claims 1 to 12, **characterized in that** the thickness (d) of the composite material (1, 100, 200) is between 0.5 and 3 mm, more particularily between 1 and 2 mm.

14. A composite material according to one of claims 1 to 13, **characterized in that** the core-layer thickness (k) is between 30 and 90%, more particularily between 50 and 85% of the thickness (d) of the composite material (1, 100, 200).

15. A composite material according to one of claims 1 to 14, **characterized in that** the boundary contour (9) between core layer (2) and that cladding layer (5), the steel material (7, 107, 106, 206, 207) of which inversely follows, in the cladding-layer thickness (p), the varying core-layer thickness (k), is oriented obliquely in this contour region (90) of the varying core-layer thickness (k).

16. A component for a vehicle structure comprising a hot-stamped plate having a composite material (1, 100, 200) according to one of claims 1 to 15.

17. The use of a hot-stamped three-layered composite material (1, 100, 200) according to one of claims 1 to 16 in a vehicle structure, more particularily bodywork structure.

## Revendications

1. Matériau composite à trois couches se présentant sous la forme d'une tôle ou d'une bande constitué d'une première couche centrale (2) formant une couche intermédiaire sur le matériau composite (1, 100, 200), comprenant un premier matériau en acier (3, 103, 203), une deuxième couche de revêtement (4), comprenant un deuxième matériau en acier (6, 106, 206) différent du premier matériau en acier (3, 103, 203), et une troisième couche de revêtement (5), comprenant un troisième matériau en acier (7, 107, 207) différente du premier matériau en acier (3, 103, 203), dans les deuxième et troisième couches de revêtement (5) sont prévues par revêtement par placage au rouleau sur des côtés opposés (21, 22) de la couche centrale (2) et forment les deux couches extérieures sur le matériau composite (1, 100, 200), dans laquelle l'épaisseur (d) du matériau composite (1, 100, 200) est constante mais l'épaisseur (k) de la couche centrale du premier matériau en acier (3, 103, 203) de la couche centrale (2) varie sur la largeur (8) du matériau composite (1, 100, 200), dans laquelle le premier matériau en acier (3, 103, 203) de la couche centrale (2) s'étend en continu sur toute la largeur (8) du matériau composite (1, 100, 200) et peut être estampé à chaud, dans laquelle la deuxième et/ou la troisième matière d'acier (6, 7, 106, 107, 206, 207) des couches de revêtement (4, 5) suivent inversement, dans l'épaisseur (p) de la couche de revêtement, la variation de l'épaisseur (k) de la couche centrale, et la deuxième et/ou troisième matière d'acier (6, 7, 106, 107, 206, 207) a une teneur en carbone inférieure à celle de la première matière d'acier (3, 103, 203).

2. Matériau composite selon la revendication 1, **caractérisé en ce que** les deuxième et troisième matériaux en acier (6, 7, 106, 107, 206, 207) des couches de revêtement (4, 5) suivent inversement, dans leurs épaisseurs (p) de couche de revêtement, la variation de l'épaisseur (k) de couche centrale.

3. Matériau composite selon la revendication 2, **caractérisé en ce que** la couche centrale (2) est construite symétriquement.

4. Matériau composite selon la revendication 1, 2 ou 3, **caractérisé en ce que** la teneur en carbone des matériaux en acier (3, 6, 7, 103, 106, 107, 203, 206, 207) de la couche centrale (2) et des deux couches de revêtement (4, 5) est inférieure à 0,8% en masse.

5. Matériau composite selon l'une des revendications 1 à 4, **caractérisé en ce que** le premier matériau en acier (3, 103, 203) est un alliage d'acier qui peut être estampé à chaud avec une résistance relativement élevée ou qui peut être estampé à chaud avec une résistance élevée.

6. Matériau composite selon l'une des revendications 1 à 5, **caractérisé en ce que** le premier matériau en acier (3, 103, 203) est un acier au manganèse-bore, en particulier un acier 20MnB8, 22MnB5 ou 32MnB5.

7. Matériau composite selon l'une des revendications 1 à 6, **caractérisé en ce que** le premier matériau en acier (3, 103, 203) contient
| | | |
|---|---|---|
| 0.08 to 0.6 | % en masse | carbone (C), |
| 0.8 to 3.0 | % en masse | manganèse (Mn), |
| 0.01 to 0.07 | % en masse | aluminum (Al), |
| 0.01 to 0.5 | % en masse | silicone (Si), |
| 0.02 to 0.6 | % en masse | chrome (Cr) |
| 0.01 to 0.08 | % en masse | titane (Ti), |
| < 0.02 | % en masse | azote (N), |
| 0.002 to 0.02 | % en masse | bore (B), |
| < 0.01 | % en masse | phosphore (P), |
| < 0.01 | % en masse | soufre (S), |
| < 1 | % en masse | molybdène (Mo) et |
le reste en fer et des impuretés résultant de la fusion.

8. Matériau composite selon l'une des revendications 1 à 6, **caractérisé en ce que** le premier matériau en acier (3, 103, 203) contient
| | | |
|---|---|---|
| 0.08 to 0.30 | % en masse | carbone (C), |
| 1.00 to 3.00 | % en masse | manganèse (Mn), |
| 0.03 to 0.06 | % en masse | aluminum (Al), |
| 0.01 to 0.20 | % en masse | silicone (Si), |
| 0.02 to 0.3 | % en masse | chrome (Cr) |
| 0.03 to 0.04 | % en masse | titane (Ti), |
| < 0.007 | % en masse | azote (N), |
| 0.002 to 0.006 | % en masse | bore (B), |
| < 0.01 | % en masse | phosphore (P), |
| < 0.01 | % en masse | soufre (S), |
| < 1 | % en masse | molybdène (Mo) et |
le reste en fer et des impuretés résultant de la fusion.

9. Matériau composite selon l'une des revendications 1 à 8, **caractérisé en ce que** le premier matériau en acier (3, 103, 203) a une teneur en Mn supérieure ou égale à 0,8 % en poids.

10. Matériau composite selon l'une des revendications 1 à 9, **caractérisé en ce que** le deuxième et/ou le troisième matériau en acier (6, 7, 106, 107, 206, 207) est un acier microallié, en particulier un acier HC460LA, HC500LA ou HC340LA, ou un acier IF, en particulier un acier HC220Y.

11. Matériau composite selon l'une des revendications 1 à 10, **caractérisé en ce que** les deuxième et troisième matériaux en acier (6, 7, 106, 107, 206, 207) sont constitués du même type d'acier.

12. Matériau composite selon l'une des revendications 1 à 11, **caractérisé en ce que** le premier matériau en acier est un acier 20MnB8 et les deuxième et troisième matériaux en acier sont un acier HC220Y, ou le premier matériau en acier est un acier 32MnB5 et les deuxième et troisième matériaux en acier sont un HC460LA.

13. Matériau composite selon l'une des revendications 1 à 12, **caractérisé en ce que** l'épaisseur (d) du matériau composite (1, 100, 200) est comprise entre 0,5 et 3 mm, en particulier entre 1 et 2 mm.

14. Matériau composite selon l'une des revendications 1 à 13, **caractérisé en ce que** l'épaisseur (k) de la couche centrale est comprise entre 30 et 90%, en particulier entre 50 et 85% de l'épaisseur (d) du matériau composite (1, 100, 200).

15. Matériau composite selon l'une des revendications 1 à 14, **caractérisé en ce que** le contour limite (9) entre la couche centrale (2) et la couche de revêtement (5), dont le matériau en acier (7, 107, 106, 206, 207) suit en sens inverse, dans l'épaisseur (p) de la couche de revêtement, l'épaisseur (k) de la couche centrale variable est orientée en biais dans cette zone (90) du contour de la couche centrale variable (k).

16. Composant pour une structure de véhicule comprenant une plaque estampée au chaud ayant un matériau composite (1, 100, 200) selon l'une des revendications 1 à 15.

17. Utilisation d'un matériau composite à trois couches étampées au chaud (1, 100, 200) selon l'une des revendications 1 à 16 dans une structure de véhicule, en particulier une structure de carrosserie.
